# FASCICULE DE BREVET EUROPEEN

(11) **EP 2 875 461 B1**
(45) Date de publication et mention de la délivrance du brevet: **09.09.2020**
(21) Numéro de dépôt: 13744759.5
(22) Date de dépôt: 16.07.2013
(51) Int. Cl.: G06F 21/10

(54) **TRANSMISSION D'UN CONTENU NUMÉRIQUE ENTRE UN TERMINAL SOURCE ET UN TERMINAL DESTINATAIRE**
ÜBERTRAGUNG VON DIGITALEM INHALT ZWISCHEN EINEM AUSGANGSENDGERÄT UND EINEM EMPFANGSENDGERÄT
TRANSMISSION OF DIGITAL CONTENT BETWEEN A SOURCE TERMINAL AND A RECIPIENT TERMINAL

(30) Priorité: 20.07.2012 FR 1257053
(43) Date de publication de la demande: 27.05.2015
(73) Titulaire: ORANGE, 75015 Paris (FR)
(72) Inventeur: LAMER, Bastien, F-92190 Meudon (FR)
(74) Mandataire: Vidon Brevets & Stratégie
(86) Numéro de dépôt international: PCT/FR2013/051711
(87) Numéro de publication internationale: WO 2014/013189

(56) Documents cités:
- EP-A1- 0 715 243
- US-A- 5 917 912

## Description

### 1. DOMAINE DE L'INVENTION

Le domaine de l'invention est celui des nouvelles techniques de l'information et de la communication relatives à la diffusion de contenus numériques.

Plus précisément, l'invention concerne une technique de transmission d'un contenu numérique, entre un terminal source et un terminal destinataire, ladite technique de transmission résultant d'une volonté de prêt entre deux utilisateurs.

L'invention a de nombreuses applications, notamment lorsqu'elle est mise en œuvre dans le cadre d'un système de prêt de livres numériques, de fichiers audio ou de fichiers vidéo.

### 2. ARRIÈRE-PLAN TECHNOLOGIQUE

Les fournisseurs de contenu numériques (livres électroniques, fichiers audio, fichiers vidéo, etc...) ou les ayants droit protègent la plupart du temps ces contenus afin d'éviter que ceux-ci ne se soient disponibles en libre accès, et que n'importe quel utilisateur puisse en bénéficier sans avoir acquis de droits au préalable.

Pour ce faire, ils utilisent des techniques de gestion de droit numériques (encore appelées techniques de DRM (pour « *Digital Rights Management* », en anglais) basées notamment sur l'utilisation de techniques de tatouage numérique, d'obfuscation de code, ou de techniques cryptographiques, qui permettent par exemple d'empêcher la copie d'un contenu numérique, et sa diffusion à des tiers.

Ainsi, un utilisateur ayant « acheté » un contenu numérique est souvent dans l'impossibilité de partager celui-ci avec ses proches, via un prêt par exemple, comme cela est normalement possible avec des objets physiques (prêt d'un livre physique, d'un CD, etc...).

Pour pallier ce problème, on connaît dans l'état de la technique, un procédé permettant à un utilisateur de prêter un contenu numérique dont il est le propriétaire, à un tiers via un système de gestion centralisé, dans lequel un utilisateur indique à un serveur qu'il prête un document en sa possession à un tiers. Le serveur se charge de gérer les prêts. Ceci permet selon cette technique connue de conserver un droit de regard sur le partage et de revendre le contenu à l'utilisateur bénéficiaire du prêt (le cas échéant).

Cependant, un inconvénient d'une telle technique réside dans le fait que des informations personnelles concernant le tiers (adresse de courriel, numéro de téléphone, etc...) doivent être fournies au système de gestion centralisée. Or le tiers ne souhaite pas nécessairement que des données personnelles le concernant soient connues ou à la disposition d'un système de gestion centralisé.

Un autre inconvénient d'une telle technique réside dans le fait que le tiers qui bénéficie du prêt du contenu numérique ne peut pas à son tour prêter le contenu numérique, comme cela est le cas avec un contenu physique. Or, comme cela a pu être expérimenté, notamment avec les fichiers musicaux, le fait de ne pas pouvoir prêter les fichiers légalement achetés constitue un frein à l'adoption massive de la technologie d'une part et encourage le piratage des fichiers d'autre part. Il est donc nécessaire de fournir une solution qui ne présente pas les inconvénients de l'art antérieur à savoir permettre un prêt tout en évitant que des données personnelles ne soient fournies et en préservant les droits d'auteurs.

Les documents de l'état de la technique EP0715243-A1 et US5917912 divulguent des méthodes permettant de prêter du contenu numérique sous forme contrôlée.

### 3. EXPOSÉ DE L'INVENTION

L'invention ne comprend pas ces inconvénients de l'art antérieur.

Plus particulièrement, l'invention se rapporte à un procédé de transmission, entre un terminal source et au moins un premier terminal destinataire, d'un contenu numérique contenant une donnée représentative d'un nombre de prêts autorisés du contenu numérique par le terminal source. Selon l'invention, le procédé comprend les étapes suivantes :
- modification du contenu numérique comprenant l'insertion par le terminal source, au sein dudit contenu numérique, d'une donnée représentative d'un nombre de prêts autorisés du contenu numérique par le premier terminal destinataire, inférieur au nombre de prêts autorisés du contenu numérique par le terminal source ; et
- transmission du contenu numérique modifié audit au moins un premier terminal destinataire.

Ainsi, au contraire des méthodes de l'art antérieur, l'invention permet de gérer entièrement une suite de prêts successifs du contenus numérique au niveau des terminaux, sans recourir à un serveur tiers, ce qui permet d'une part d'assurer un protection des droits d'auteur selon les législations en vigueur et d'autre part de garantir l'anonymat de l'utilisateur auquel le contenu est prêté.

Selon une caractéristique particulière, le contenu numérique est reçu au préalable d'un serveur de contenus, le nombre de prêts autorisés du contenu numérique par le terminal source étant déterminé par ledit serveur de contenus.

Ainsi, l'éditeur du contenu numérique peut fixer une limite au nombre de prêts possibles de ce contenu, par exemple en fonction du type de transaction effectué avec le terminal source.

Selon une caractéristique particulière, le nombre de prêts autorisés du contenu numérique par le premier terminal destinataire correspond au nombre de prêts autorisés du contenu numérique par le terminal source diminué par le nombre de terminaux destinataires auxquels le contenu numérique modifié est transmis.

Le nombre de prêts du contenu est ainsi contrôlé afin de limiter sa distribution lors des différents prêts successifs entre terminaux.

Selon une caractéristique particulière, le nombre de prêts autorisés du contenu numérique par le premier terminal destinataire est un nombre de prêts fixé au moyen du terminal source.

L'utilisateur du terminal source peut ainsi fixer un nombre arbitraire de prêts autorisés pour l'utilisateur auquel il prête le contenu numérique, voire décider d'empêcher tout prêt par ce dernier.

Selon un mode de réalisation particulier lequel le contenu numérique est mémorisé dans le terminal source, la donnée représentative d'un nombre de prêts autorisés du contenu numérique par le terminal source est modifiée, dans le contenu numérique mémorisé, en fonction du nombre de terminaux destinataires auxquels le contenu numérique modifié est transmis et/ou du nombre de prêts autorisés du contenu numérique par le premier terminal destinataire.

Ainsi, le nombre de prêts possibles est également limité au niveau du terminal source, afin de limiter la prolifération abusive du contenu numérique à partir de ce terminal source.

Selon une caractéristique particulière la modification du contenu numérique comprend en outre l'insertion, au sein dudit contenu numérique, d'une période de prêt du contenu, le premier terminal destinataire bloquant l'accès au contenu reçu à l'expiration de ladite période de prêt.

Il est ainsi possible de limiter dans le temps le prêt d'un contenu à un autre utilisateur.

Selon une caractéristique particulière, la modification du contenu numérique comprend en outre l'insertion, au sein dudit contenu numérique, d'un identifiant du contenu numérique et d'un identifiant du premier terminal destinataire, le premier terminal destinataire donnant accès au contenu numérique modifié en fonction dudit identifiant du premier terminal destinataire.

Il est ainsi possible de garantir que le contenu numérique n'est accessible à l'utilisateur auquel il est prêté.

Selon un mode de réalisation particulier, la modification du contenu numérique comprend en outre l'insertion, au sein dudit contenu numérique, d'un identifiant du terminal source, le procédé comprenant en outre la transmission au terminal source d'une notification de résiliation de prêt au moyen dudit identifiant du terminal source.

Ainsi, il est possible de réallouer un nombre de prêts autorisés au terminal source lorsqu'un terminal destinataire n'exploite ni le contenu numérique qui lui est prêté, ni la possibilité de le prêter à d'autres terminaux.

Selon une caractéristique particulière la notification de résiliation de prêt est un message comprenant le contenu numérique modifié.

Ceci permet, dans le cas où le contenu numérique ne peut être prêté qu'une seule fois, de restituer le contenu numérique au terminal source afin que celui-ci puisse de nouveau y accéder.

Selon un mode de réalisation particulier, l'insertion de la donnée représentative d'un nombre de prêts autorisés du contenu numérique par le premier terminal destinataire consiste à remplacer, au sein du contenu numérique, la donnée représentative d'un nombre de prêts autorisés du contenu numérique par le terminal source par ladite donnée représentative d'un nombre de prêts autorisés du contenu numérique par le premier terminal destinataire.

Ainsi, chaque terminal peut avoir accès directement et sans ambigüité au nombre de prêts autorisés du contenu numérique qu'il peut gérer à son niveau.

Selon un mode de réalisation particulier, ledit contenu numérique modifié est transmis par le premier terminal destinataire vers au moins un deuxième terminal destinataire en fonction de la donnée représentative d'un nombre de prêts autorisés du contenu numérique par le premier terminal destinataire.

Ainsi, l'invention permet de faire transiter le contenu numérique par l'intermédiaire d'un utilisateur relais. L'invention permet ainsi de reproduire techniquement un schéma de prêt classique dans lequel un prêteur prête un contenu à une personne mais en la faisant transiter par un utilisateur qui est une connaissance commune du prêteur et du destinataire.

L'invention se rapporte également, dans au moins un mode de réalisation, à un procédé de retransmission par un premier terminal destinataire d'un contenu numérique reçu d'un terminal source, ledit contenu numérique contenant une donnée représentative d'un nombre de prêts autorisés dudit contenu numérique par le premier terminal destinataire.

Selon l'invention le procédé comprend les étapes suivantes :
- obtention par le premier terminal destinataire, à partir dudit contenu numérique, dudit nombre de prêts autorisés dudit contenu numérique par le premier terminal destinataire ; et
- transmission du contenu numérique vers au moins un deuxième terminal destinataire en fonction dudit nombre de prêts autorisés dudit contenu numérique par le premier terminal destinataire.

Selon un mode de réalisation particulier, le premier terminal destinataire envoie une requête d'autorisation de prêt au terminal source, le contenu numérique modifié n'étant transmis vers le deuxième terminal destinataire que suite à la réception, par le premier terminal destinataire, d'un message de réponse positif à ladite requête.

Ceci permet à l'utilisateur d'un terminal octroyant le prêt du contenu numérique à un autre utilisateur de s'opposer à tout prêt ultérieur par cet autre utilisateur, s'il le juge nécessaire.

L'invention se rapporte également à un terminal, dit terminal source, pour la transmission vers au moins un premier terminal destinataire, d'un contenu numérique contenant une donnée représentative d'un nombre de prêts autorisés du contenu numérique par le terminal source, ce terminal comprenant :
des moyens de modification du contenu numérique comprenant des moyens d'insertion, au sein dudit contenu numérique, d'une donnée représentative d'un nombre de prêts autorisés du contenu numérique par le premier terminal destinataire, inférieur au nombre de prêts autorisés du contenu numérique par le terminal source; et
des moyens de transmission du contenu numérique modifié audit au moins un premier terminal destinataire.

L'invention se rapporte en outre à un terminal, dit terminal relais, pour la retransmission vers au moins un terminal destinataire, d'un contenu numérique reçu d'un terminal source contenant une donnée représentative d'un nombre de prêts autorisés dudit contenu numérique par le terminal relais, comprenant :
des moyens d'obtention, à partir du contenu numérique reçu, dudit nombre de prêts autorisés dudit contenu numérique par le terminal relais ; et
des moyens de transmission du contenu numérique vers ledit au moins un terminal destinataire, en fonction dudit nombre de prêts autorisés dudit contenu numérique par le terminal relais.

Dans un autre mode de réalisation, l'invention se rapporte également à un système de transmission de contenus numériques comprenant le terminal source et le terminal relais ci-avant.

L'invention concerne également un programme d'ordinateur comportant des instructions pour la mise en œuvre d'un procédé de de transmission ou d'un procédé de retransmission tel que présenté préalablement, lorsque ce programme est exécuté par un processeur.

L'invention vise aussi un support d'informations lisible par un processeur de données, et comportant des instructions d'un programme d'ordinateur tel que mentionné ci-dessus.

### 4. LISTE DES FIGURES

- La figure 1 présente, schématiquement, un mode de réalisation de l'invention, dans lequel un contenu numérique est partagé par une pluralité de terminaux, via la mise en œuvre d'étapes de procédés de transmission et de réception selon la présente invention ; et
- La figure 2 représente, schématiquement, un autre exemple de partage d'un contenu numérique selon la présente invention.

### 5. DESCRIPTION DETAILLEE

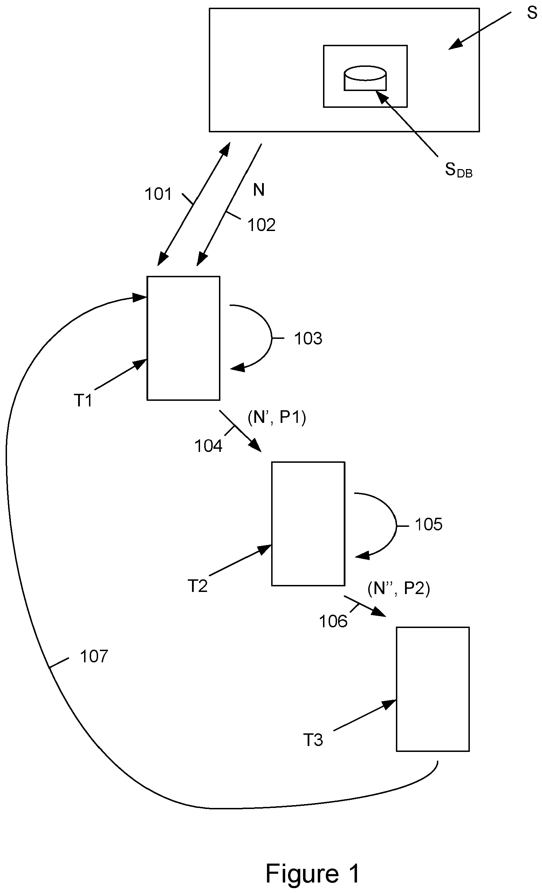

On se réfère tout d'abord à la **figure 1** qui présente, schématiquement, un mode de réalisation de l'invention, dans lequel un contenu numérique est partagé entre plusieurs utilisateurs, via des prêts successifs entre leurs terminaux. On présente, en relation avec cette figure 1, les différentes étapes qui permettent la mise ne œuvre de l'invention et notamment le calcul du nombre de prêts autorisés d'un contenu numérique au niveau de chacun des terminaux impliqués.

Le système impliqué dans ce mode de réalisation de l'invention comporte notamment un serveur S de contenus numériques, contenant une base de données S_{BD} dans laquelle sont stockés différents contenus numériques, ainsi que trois terminaux T1, T2 et T3, sans que l'invention ne soit limitée à un tel nombre de terminaux.

On entend ici par « contenu numérique » tout élément numérique comprenant d'une part un contenu utile, tel qu'un livre électronique, un fichier audio (par exemple au format mp3), un fichier vidéo (par exemple au format mpeg, avi, etc...), cette liste n'étant pas limitative, et d'autre part des données associées à ce contenu utile (i.e. des métadonnées comme par exemple l'identité du propriétaire du contenu utile), le tout sous forme des données numériques. En particulier, le contenu utile est utilisé par l'utilisateur d'un terminal tandis que les données associées sont utilisées par le terminal de cet utilisateur.

Chacun des terminaux peut être par exemple un smartphone, ou un dispositif de lecture de livre électronique (« ebook ») comprenant des moyens de communications intégrés, et comprend, outre des moyens de transmission permettant la communication entre les différents terminaux, une unité de calcul, une mémoire vive et une mémoire morte permettant d'exécuter une application logicielle dédiée au prêt de contenus numérique entre terminaux, qui gère le fonctionnement des terminaux dans le cadre du procédé de prêt expliqué par la suite. Cette application logicielle peut être téléchargée et installée au préalable par ces terminaux.

Le serveur S fournit initialement (étape 102) un contenu numérique à l'utilisateur d'un terminal T1 dit « source » suite à une transaction d'achat (ou de location) de ce contenu (étape 101) avec ce serveur S.

Ce contenu numérique ne peut être lu et prêté qu'au moyen de l'application logicielle installée sur les terminaux T1,T2 et T3. En d'autres termes, cette application logicielle peut bloquer aussi bien la lecture du contenu que la possibilité de le transmettre à un autre terminal, comme il sera vu par la suite.

Le contenu numérique transmis du serveur S vers le terminal source T1 contient notamment une donnée représentative d'un nombre *N* de prêts autorisés dudit contenu numérique par le terminal source T1 (cette donnée pouvant être ce nombre *N* en tant que tel), insérée par le serveur S dans le contenu numérique transmis au terminal source T1.

Dans un mode de réalisation, ce nombre *N* de prêts autorisés est inséré au sein d'un champ de données spécifique du contenu numérique. Dans une variante, ce nombre *N* de prêts autorisés est inséré dans le contenu numérique selon une technique d'obfuscation. Des techniques de stéganographie combinée à des techniques cryptographiques peuvent être mises en œuvre pour garantir la protection de cette donnée, et notamment éviter une modification non autorisée de celle-ci.

Ce nombre entier *N* est déterminé au niveau du serveur de contenus S, par exemple par l'éditeur du contenu numérique acquis par le terminal source T1, et correspond à un nombre maximum de prêts du contenu numérique que le terminal source T1 peut faire vers d'autres terminaux.

Le cas particulier où *N*=*0* correspond au cas où l'éditeur de contenus n'autorise pas l'utilisateur du terminal source T1 à prêter ce contenu numérique. Le cas particulier où *N*=*1* correspond au cas où l'éditeur de contenus n'autorise l'utilisateur du terminal source T1 à ne prêter ce contenu numérique qu'à un seul autre utilisateur à la fois, et ainsi de suite.

L'ensemble du contenu numérique, et notamment le nombre *N* de prêts autorisés, peut être transmis de manière chiffrée au terminal T1, de sorte que ce nombre *N* de prêts autorisés ne soit accessible que par l'application logicielle exécutée sur les terminaux, l'utilisateur du terminal T1 n'ayant accès à ce type d'informations que par le biais de cette application logicielle.

Lorsque le contenu numérique est loué auprès d'un terminal Ti par un terminal Ti+1, ce contenu peut comprendre en outre des informations relatives à une durée de location (et notamment, des informations qui permettent la mise en indisponibilité du contenu numérique, une fois la durée de location expirée) qui elles aussi peuvent être chiffrées, si nécessaire.

Une fois reçu par le terminal source T1, le contenu numérique peut ainsi, d'une part, être mis à la disposition de l'utilisateur du terminal T1 (pour le visionner, l'écouter, etc...) au moyen de l'application logicielle installée sur ce terminal.

Par ailleurs, le terminal source T1 recevant le contenu numérique acquis auprès du serveur S récupère, au sein de ce contenu numérique, la donnée représentative du nombre *N* de prêts autorisés au niveau de ce terminal T1 au moyen de l'application logicielle exécutée sur ce terminal, laquelle obtient ainsi la connaissance du nombre *N* de prêts autorisés au niveau du terminal T1.

Cette opération peut être réalisée en lisant cette donnée représentative au sein du contenu numérique, ou au sein de métadonnées qui sont associées à ce contenu numérique, typiquement en extrayant cette donnée représentative d'un champ de données du contenu numérique spécifiquement réservé à ce type d'information. Alternativement, il est possible de déchiffrer la donnée représentative de ce nombre *N* de prêts autorisés lorsque celui-ci est présent dans le contenu numérique sous la forme d'une information chiffrée.

Si le nombre *N* de prêts autorisés obtenu est nul, l'utilisateur du terminal source T1 ne peut alors pas prêter le contenu numérique. Ainsi, lorsqu'elle détecte un tel nombre *N*=*0* de prêts autorisés, l'application logicielle bloque la transmission de ce contenu numérique vers tout autre terminal destinataire. Ce cas de figure caractérise l'acquisition d'un contenu numérique uniquement accessible à l'utilisateur du terminal T1.

Dans le cas de figure où le nombre *N* de prêts autorisés au niveau du terminal T1 est supérieur ou égal à un, l'application logicielle installée sur le terminal source T1 autorise alors ce terminal source T1 à transmettre ce contenu numérique vers un autre (voire plusieurs) terminal dit « destinataire », sur lequel est également installée l'application logicielle, ce en fonction du nombre *N* de prêts autorisés. En d'autres termes, l'application logicielle autorise l'utilisateur du terminal T1 à prêter le contenu numérique à un certain nombre d'utilisateurs, dans la limite du nombre *N* de prêts autorisés et en fonction du nombre de prêts autorisés qu'il souhaite allouer aux utilisateurs auxquels il prête le contenu.

Ainsi, dans un autre cas de figure où *N* = *1,* l'utilisateur du terminal source T1 peut prêter le contenu numérique à un seul autre utilisateur à la fois, sans que ce dernier ne puisse prêter à son tour ce contenu. Par contre, si par exemple *N*=*6,* l'utilisateur du terminal source T1 peut alors soit prêter en même temps six versions du contenu numérique à des connaissances différentes de son choix (disposant chacune d'un terminal destinataire dans laquelle l'application logicielle est installée) sans leur octroyer de possibilité de prêt du contenu, soit prêter le contenu numérique à l'utilisateur d'un terminal destinataire en lui octroyant la possibilité de prêter un certain nombre de fois ce contenu à son tour, ce nombre étant borné par le nombre de prêts autorisés non utilisés (ici 5 prêts autorisés possibles au maximum).

L'application logicielle installée sur le terminal source T1 permet ainsi de limiter le prêt en tenant à jour une base de données stockée dans la mémoire vive du terminal source T1. Cette base de données peut notamment comprendre, pour chaque contenu d'un ensemble de contenus numériques pouvant être prêtés par ce terminal T1, un identifiant de ce contenu, le nombre *N* de prêts autorisés pour ce contenu, une information de statut indiquant si ce contenu est prêt, ainsi qu'un identifiant d'un terminal destinataire auquel ce contenu est prêté (par exemple le numéro de téléphone de ce terminal) lorsque c'est le cas.

Une telle base de données peut ainsi prendre la forme du tableau 1 ci-dessous :

| **Identifiant du contenu** | **Nombre *N* de prêts autorisés** | **Statut du contenu** | **Identifiant du terminal destinataire** |
|---|---|---|---|
| 1234 | 4 | Non prêté | |
| 1235 | 3 | prêté | Num_tel_T2, Num_tel_T3 |
| 1236 | 2 | prêté | Num_tel_T2 |
| 1236 | 2 | prêté | Num_tel_T3 |

On se place par la suite dans le cas particulier où N=2, i.e. le cas où l'éditeur autorise le terminal source T1 à gérer deux prêts du contenu numérique. Dans ce cas, l'utilisateur du terminal source T1 peut prêter ce contenu à deux utilisateurs différents sans leur accorder la possibilité de prêter à leur tour ce contenu, ou alors prêter ce contenu à un seul utilisateur en lui accordant la possibilité de prêt ce contenu à un autre utilisateur. On considère par la suite que l'utilisateur du terminal T1 choisit la seconde possibilité.

Lorsque l'utilisateur du terminal source T1 décide de prêter le contenu numérique à l'utilisateur du terminal destinataire T2, l'application logicielle installée sur le terminal T1 modifie (étape 103) dans un premier temps le contenu numérique à prêter en y insérant une donnée relative à un nombre *N'* de prêts autorisés de ce contenu par le terminal destinataire T2. Afin de limiter la diffusion du contenu numérique, ce nombre *N'* de prêts autorisés au niveau du terminal T2 est strictement inférieur au nombre N de prêts autorisés au niveau du terminal T1.

Ce nombre *N'* de prêts autorisés du contenu par le terminal destinataire T2 peut avantageusement être inséré, au sein du contenu numérique modifié, en remplacement du nombre *N* de prêts autorisés du contenu par le terminal source T1 (notamment quand ce nombre N est inséré dans un champ facilement identifiable du contenu numérique), la connaissance de ce nombre N n'étant pas utile pour le terminal destinataire T2.

Ce nombre *N'* est calculé par l'application logicielle du terminal source T1, en tenant compte du nombre *N* de prêts autorisés au niveau du terminal source T1 qui constitue une borne à ne pas dépasser, ainsi qu'éventuellement du souhait de l'utilisateur prêteur du terminal source T1 de permettre (ou non) à l'utilisateur du terminal destinataire T2 de prêter à son tour le contenu numérique.

En particulier, ce nombre *N'* peut être égal au nombre *N* de prêts autorisés du contenu numérique par le terminal source T1, diminué par le nombre de terminaux destinataires auxquels le contenu numérique modifié est transmis par le terminal T1. Ainsi, pour reprendre l'exemple précédent de N=6, lorsque le contenu est prêté à trois utilisateurs destinataires, N'=6-3=3, ce qui signifie que les utilisateurs destinataires du prêt pourront à leur tour prêter trois fois ce contenu.

Dans une variante, ce nombre N' peut être un nombre de prêts fixé au moyen d'une interface du terminal source T1, strictement inférieur au nombre N de prêts autorisés au niveau du terminal source, ce qui permet à l'utilisateur du terminal source T1 de décider combien de prêts autorisés il souhaite allouer au terminal destinataire auquel il prête le contenu. Cette interface peut être proposée à l'utilisateur par l'application logicielle lorsque celui-ci décide de prêter le contenu, en lui indiquant le nombre N et lui proposant de choisir un nombre N' strictement inférieur à ce nombre N. En particulier, lorsque l'utilisateur du terminal source T1 ne souhaite pas allouer de possibilité de prêt à l'utilisateur du terminal destinataire T2 auquel il veut prêter le contenu, il peut fixer un nombre N' de prêts autorisés égal à 0.

Le nouveau nombre N' de prêts autorisés est conservé en mémoire dans le terminal source T1, soit dans une version modifiée du contenu numérique qui est mémorisée dans le terminal source T1, soit dans l'application logicielle elle-même du terminal source T1, voire sous ces deux formes.

Ceci permet, d'une part, de pouvoir modifier le nombre de prêts autorisés par la suite, par exemple lorsque la durée d'un prêt octroyé à un terminal destinataire a expiré. En outre, cela permet de tenir compte, au niveau du terminal source T1, de la limitation du nombre de prêts autorisés engendrée par des prêts déjà effectués vers d'autres terminaux destinataires. Ainsi, en prêtant le contenu numérique à un autre utilisateur avec N'=1, le nombre de prêts autorisés ultérieurs du contenu numérique par ce terminal source T1 est limité, tout comme pour cet autre utilisateur, à N'=1.

Lors de l'étape 103 de préparation du contenu numérique modifié à transmettre vers le terminal destinataire T2, l'application logicielle installée sur le terminal source T1 peut insérer dans ce contenu, outre le nombre N', les paramètres de prêt suivants :
- l'identifiant du contenu numérique (e.g. « 1234 »),
- un identifiant du terminal source T1 (e.g. le numéro de téléphone « Num_tel_T1 »),
- un identifiant du terminal destinataire T2 (e.g. le numéro de téléphone « Num_tel_T2 »),
- le statut du contenu numérique (e.g. consultation personnelle ou prêt),
- une période P1 de prêt du document (par exemple 4 semaines).

Certaines de ces données peuvent être insérées dans le contenu numérique sous la forme d'un marqueur (tag) pouvant être constitué de la façon suivante : *«*tag=*1234*/*Num_tel_T1*/*Num_tel_T2*/*statut».* Ces données ne sont accessibles que par l'application logicielle d'un terminal destinataire, sans que l'utilisateur de ce terminal destinataire ne puisse y avoir accès, afin d'éviter que cet utilisateur ne puisse usurper ce marqueur.

Une fois le contenu numérique modifié par l'application logicielle, une version de ce contenu modifié peut être recryptée par cette application logicielle, afin de la rendre inaccessible, et mémorisée dans le terminal source T1, avec les paramètres susmentionnés sous un forme non-cryptée, en remplacement du contenu numérique reçu du serveur S, afin de retirer le droit de consultation à l'utilisateur du terminal source T1, ce droit de consultation pouvant être rétabli à l'issue d'une période P1 de prêt insérée dans le contenu modifié.

A ce stade, il est possible de mémoriser dans le terminal source le contenu numérique avec la donnée représentative du nombre *N* de prêts autorisés du contenu numérique par le terminal source.

Cette donnée peut être modifiée en fonction du nombre de terminaux destinataires auxquels le contenu numérique modifié est transmis, du nombre *N'* de prêts autorisés du contenu numérique par le premier terminal destinataire, voire de ces deux facteurs. En particulier, le nombre *N* de prêts autorisés du contenu numérique par le terminal source peut être diminué du nombre de terminaux destinataires auxquels le contenu numérique modifié est transmis par le terminal source T1 et du nombre *N*' de prêts autorisés du contenu numérique par le premier terminal destinataire T2.

Ainsi, lorsque l'utilisateur du terminal source souhaite à nouveau prêter ce contenu numérique, il dispose d'un nombre de prêts restants possibles limité en fonction des prêts qu'il a déjà attribués à d'autres utilisateurs.

Le terminal source T1 transmet alors le contenu modifié, contenant le nombre N' et certains des paramètres de prêt susmentionnés (notamment la période P1 de prêt), vers le terminal destinataire T2 (étape 104), ce qui concrétise le prêt de ce contenu à l'utilisateur de ce terminal destinataire.

Lorsque le terminal destinataire T2 reçoit le contenu numérique modifié provenant du terminal source T1, l'application logicielle installée sur ce terminal T2 peut dans un premier temps le décrypter, si ce contenu a été crypté par le terminal source T1, afin de pouvoir le rendre consultable par l'utilisateur du terminal T2.

L'application logicielle du terminal T2 récupère alors le nombre N' de prêts autorisés au niveau de ce terminal T2, ainsi que les éventuels paramètres de prêt insérés dans le contenu numérique modifié dont notamment la durée P1 de prêt pendant laquelle l'application rend accessible ce contenu sur le terminal T2, et mémorise ces éléments dans sa propre base de données, similaire à la base de données présentée précédemment pour le terminal T1.

L'application logicielle du terminal T2 vérifie alors s'il est possible, ou non, de prêter le contenu numérique à un autre terminal destinataire en fonction du nombre N', similairement à ce qui est fait avec le nombre N au niveau du terminal source T1 et informe l'utilisateur de cette possibilité.

Si l'utilisateur du terminal destinataire T2 décide de prêter à son tour, à cet autre terminal destinataire T3, le contenu numérique que l'utilisateur du terminal source T1 lui a prêté, s'il en a la possibilité (i.e. N'>0), l'application logicielle installée sur ce terminal détermine un nouveau nombre N" de prêts autorisés du contenu, pour cet autre terminal destinataire T3, et modifie le contenu numérique afin d'y insérer ce nombre N" de prêts autorisés, en plus de certains des paramètres de prêt évoqués précédemment (étape 105). Une nouvelle période de prêt P2 peut également être insérée, dont l'expiration est calculée pour avoir lieu avant l'expiration de la période P1 afin d'éviter un contournement abusif de la limitation du nombre de prêts autorisés. A titre d'exemple, pour une période de prêt P1 allouée au terminal T2 de quatre semaines, une période de prêt P2 de deux semaines peut être choisie lorsque l'utilisateur du terminal T2 décide de prêter le contenu au bout d'une semaine.

Le terminal T2 transmet ensuite vers cet autre terminal destinataire T3 ce contenu numérique modifié selon l'une des techniques de modification du nombre de prêts autorisés présentées ci-avant (étape 106).

Des prêts en cascades entre terminaux peuvent ainsi être réalisés. En effet, dans le cas de figure où le terminal destinataire T2 peut octroyer à son tour un prêt du contenu numérique suite à l'obtention d'un nombre de prêts autorisés présent dans le contenu numérique reçu, ce terminal T2 peut transmettre un contenu numérique à nouveau modifié, et ainsi de suite.

Ainsi, dans le cas présent, comme l'utilisateur du terminal T2 a la possibilité de prêter une fois le contenu (i.e. N'=1), il peut transmettre au terminal T3 (étape de transmission 106) une version modifiée de ce contenu numérique selon l'une quelconque des techniques de modification du nombre de prêts autorisés présentées ci-avant, dans lequel un nouveau nombre N" de prêts autorisés au niveau de ce terminal T3 (ici N"=0) et des paramètres de prêt, notamment une période de prêt P2, ont été insérés.

Par la suite, le prêt du contenu numérique au terminal destinataire T3 peut expirer à un certain moment, soit à l'expiration de la période P2 de prêt lorsqu'une telle période a été définie par le terminal destinataire T2, soit lorsque l'utilisateur du terminal T3 décide de ne plus consulter ce contenu numérique reçu et de ne pas prêter celui-ci, ce qui libère des prêts autorisés. Il en va naturellement de même pour le contenu prêté au terminal destinataire T2 par le terminal source T1.

Ainsi, dans un premier cas de figure où seule l'application logicielle du terminal T3 détecte l'expiration de la période P1 de prêt, cette application logicielle rend alors ce contenu inaccessible au niveau de ce terminal T3, en le cryptant afin de le rendre illisible ou en l'effaçant de ce terminal T3.

En outre, dans la mesure où l'application logicielle du terminal source T1 a bien inséré un identifiant du terminal T1, tel qu'un numéro de téléphone du terminal ou une adresse dans le contenu, le terminal T3 utilise alors cet identifiant pour envoyer (étape 107) une notification de résiliation de prêt au terminal source T1, afin de l'informer que l'utilisateur du terminal T3 libère le contenu numérique qu'il a emprunté.

Cette notification de résiliation de prêt peut consister en un simple message indiquant la fin du prêt du contenu numérique au niveau du terminal T3, ou en un message contenant le contenu numérique prêté, éventuellement recrypté avant transmission, afin de restituer celui-ci directement au terminal source T1.

Dans ce dernier cas, un marqueur de résiliation spécifique peut être inséré dans le contenu numérique restitué au terminal source T1 (par exemple *«* tag=*1234*/*Num_tel_T1*/*Num_tel_T3*/*prêt*=*2» inséré dans le contenu numérique renvoyé de T3 à T1*), afin d'indiquer au terminal source T1 que ce contenu est bien un contenu restitué. Alternativement, si le terminal T2 a inséré un tel identifiant du terminal T2 dans le contenu prêté au terminal T3, le terminal T3 peut restituer ce contenu à ce terminal T2 en insérant un marqueur de résiliation similaire (par exemple *«* tag=*1234*/*Num_tel_T2*/*Num_tel_T3*/*prêt*=*1 »*) dans le contenu numérique qui est alors transmis au terminal T2 pour l'informer de la libération de ce contenu par le terminal T3.

Lorsque le terminal source T1 reçoit ce contenu restitué, il vérifie d'abord que ce contenu lui appartient bien, en récupérant l'identifiant de ce contenu et vérifiant que cet identifiant est bien mémorisé dans sa base de données. Si le prêt de ce contenu a entraîné l'inaccessibilité de ce contenu au niveau du terminal source T1, ce terminal peut alors rendre à nouveau accessible ce contenu (par exemple en décryptant le contenu numérique).

Dans un autre cas de figure où les applications logicielles des deux terminaux T2 et T3 détectent l'expiration du prêt au terminal T3, le contenu numérique est alors toujours rendu inaccessible (crypté ou effacé) au niveau du terminal T3, tandis qu'au niveau du terminal T2, l'application logicielle met à jour le nombre N de prêts autorisés en l'augmentant du nombre de prêts autorisés ainsi libérés par le terminal T3, afin de permettre d'éventuels autres prêts par le terminal T2. En outre, lorsque le prêt du contenu au terminal T3 a entraîné l'inaccessibilité du contenu sur le terminal T2, ce contenu peut être rendu à nouveau accessible par l'application logicielle installée sur le terminal T2.

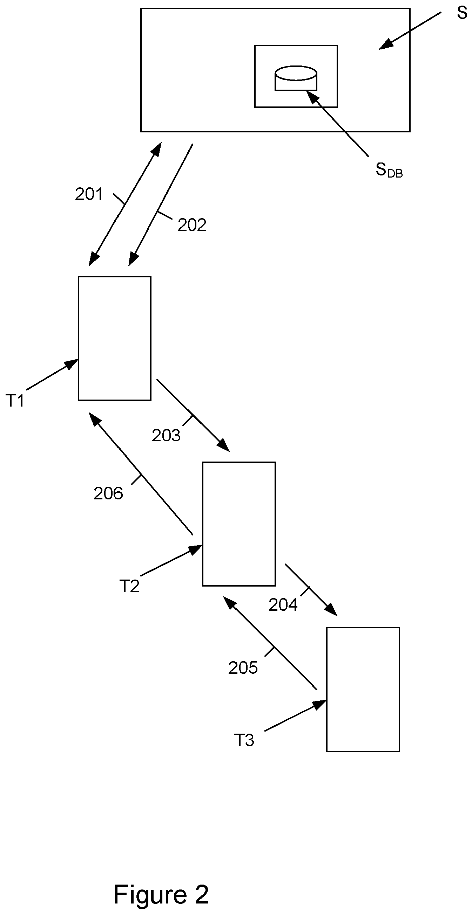

La **figure 2** illustre un autre exemple de prêts successifs d'un contenu numérique impliquant les mêmes trois terminaux T1,T2 et T3.

Dans cet exemple, l'utilisateur du terminal T1 a acquis (étape 202) un contenu numérique avec la possibilité de prêter dix fois ce contenu numérique (i.e. *N*=*10*), suite à une transaction (étape 201) avec un serveur de contenus S.

Il décide de prêter, lors d'une première phase T3, ce contenu à l'utilisateur d'un terminal T2, en lui octroyant en outre la possibilité de prêter à quatre reprises ce contenu numérique.

L'application logicielle installée sur le terminal T1 crée alors une version modifiée du contenu numérique, dans laquelle elle insère un nouveau nombre N'=4 de prêts autorisés pour le terminal T2, avant de transmettre ce contenu modifié au terminal T2. Elle peut en outre y insérer une période de prêt P1, par exemple de 4 semaines. En outre, cette application logicielle conserve en mémoire une autre version modifiée du contenu numérique dans laquelle le nombre N de prêts, autorisés cette fois au niveau du terminal T1, est mis à jour pour être égal à *N* = *10 - 1* - *4 = 5* prêts autorisés, en tenant compte du prêt effectué au terminal T2 ainsi que des 4 possibilités de prêt qui lui sont alloués.

Par la suite, lors d'une deuxième phase 204, l'utilisateur du terminal T2, qui a reçu le contenu numérique modifié du terminal T1, décide de prêter à son tour ce contenu à l'utilisateur d'un autre terminal T3, en lui octroyant en outre la possibilité de prêter une seule fois le contenu numérique transmis.

L'application logicielle installée sur le terminal T2 crée alors une version modifiée du contenu numérique, dans laquelle elle insère un nouveau nombre N"=1 de prêts autorisés pour le terminal T3, avant de transmettre ce version modifiée du contenu au terminal T3. Elle peut en outre y insérer une période de prêt P2, expirant avant la période de prêt P1, par exemple de 2 semaines. En outre, cette application logicielle conserve en mémoire une autre version modifiée du contenu numérique dans laquelle le nombre N' de prêts autorisés, pour ce terminal T2, est mis à jour pour être égal à *N'* = *4* - *1* - *1* = 2 prêts autorisés.

Une fois que le contenu numérique reçu par le terminal T3 redevient disponible (soit parce que l'utilisateur de ce terminal décide de ne plus consulter ce contenu numérique reçu et de ne pas prêter celui-ci, soit à l'expiration de la durée P2 de prêt de ce contenu), une troisième phase 205 a lieu durant laquelle le terminal T3 indique au terminal T2 la remise en disponibilité du contenu prêté ainsi que des prêts autorisés au niveau du terminal T3, par exemple sous la forme d'un message de mise à jour du nombre N' mémorisé dans le terminal T2 ou par la restitution du contenu numérique prêté. Suite à cela, l'application logicielle du terminal T2 met à jour le nombre N' de prêts autorisés au niveau du terminal T2 en la raugmentant, ce nombre N' repassant ici de *N'*=*2* à *N'*=*4,* si aucun autre prêt n'a été octroyé entre temps par l'utilisateur du terminal T2.

Par la suite, lorsque le contenu numérique reçu par le terminal T2 redevient disponible à son tour (par exemple à l'expiration d'une période de prêt P1 de ce contenu), une quatrième phase 206 a lieu durant laquelle le terminal T2 indique au terminal T1 la remise en disponibilité du contenu prêté ainsi que des prêts autorisés au niveau du terminal T2, sous la forme d'un message de mise à jour du nombre N mémorisé dans le terminal T1 ou par la restitution du contenu numérique prêté. En conséquence, l'application logicielle du terminal T1 met à jour le nombre N de prêts autorisés au niveau du terminal T1 en la raugmentant, ce nombre N repassant alors de *N*=*5* à *N*=*10,* toujours dans la mesure où aucun autre prêt n'a été octroyé entre temps par l'utilisateur du terminal T1.

Les différentes phases susmentionnés et l'évolution des nombres N,N',N" de prêts autorisés alloués respectivement aux terminaux T1,T2 et T3 sont illustrées dans le tableau 2 ci-dessous :

| **Phase** | **Terminal T1 Nombre N de prêts autorisés** | **Terminal T2 Nombre N' de prêts autorisés** | **Terminal T3 Nombre N" de prêts autorisés** |
|---|---|---|---|
| 202 | 10 | 0 | 0 |
| 203 | 5 | 4 | 0 |
| 204 | 5 | 2 | 1 |
| 205 | 5 | 4 | 0 |
| 206 | 10 | 0 | 0 |

On voit bien dans ce tableau qu'à chaque phase de ce mécanisme de prêts successifs, le nombre total des prêts réellement effectués et des prêts autorisés alloués aux différents terminaux reste égal au nombre N fixé au départ par le serveur de contenu S, et donc que la prolifération du contenu numérique est contrôlée.

Selon une variante, dans le cas de prêts de contenu numérique en cascade, le prêteur initial du terminal source T1, propriétaire du contenu numérique, peut s'opposer à l'octroi d'un prêt via l'établissement d'un système de remontée d'informations avant la concrétisation un prêt d'un contenu numérique.

Ainsi, par exemple, lorsqu'un premier utilisateur destinataire (i.e. celui du premier terminal destinataire T2) souhaite prêter le contenu reçu à un autre utilisateur destinataire (celui du deuxième terminal destinataire T3), le terminal T2 du premier utilisateur transmet, préalablement au prêt, une requête d'autorisation de prêt (par email ou SMS) au terminal source T1 du propriétaire de contenu numérique. Cette requête d'autorisation de prêt peut optionnellement contenir une requête de prêter le contenu numérique un nombre de fois supérieur au nombre N' de prêts possibles par le terminal T2, dans la limite du nombre N de prêts possibles par le terminal source T1, afin de déroger au plafond de prêts possibles attribué au premier terminal destinataire T2, sous réserve de l'accord de l'utilisateur du terminal source T1.

L'application logicielle du terminal source T1 récupère ce message et offre à l'utilisateur prêteur la possibilité de s'opposer à ce nouveau prêt par l'envoi au terminal T2 d'un message de réponse négative à la requête de prêt. Si l'utilisateur s'oppose à ce prêt, suite à la réception de ce message de réponse négative, l'application logicielle installée sur ce terminal T2 bloque la transmission de ce contenu au terminal T3.

A contrario, si le message de réponse à cette requête de prêt est positif, l'application logicielle installée sur le terminal T2 autorise la transmission du contenu numérique au deuxième terminal destinataire T3. Dans le cas où le premier terminal destinataire T2 a également sollicité l'autorisation de prêter le contenu un nombre de fois supérieur au nombre N' qui lui est alloué, ce message de réponse positif peut contenir une indication du nombre maximum (compris entre N' et N) de prêts possibles que le terminal source T1 accorde au premier terminal destinataire T2.

Pour ce faire, par exemple, la technique décrite met en œuvre des mécanismes de communication de proche en proche permettant de requérir auprès du terminal prêteur initial une autorisation de lecture de contenu. De manière imagée, dans cette variante, un système de communication de pair-à-pair permet de transmettre des autorisations de lecture de contenus à partir d'un propriétaire initial, tout en garantissant l'anonymat des utilisateurs destinataires vis-à-vis du réseau de communication (il s'agit d'un anonymat relatif, chaque utilisateur destinataire étant identifié au moins depuis le terminal lui ayant octroyé le prêt).

## Revendications

1. Procédé de transmission, entre un terminal source (T1),un premier terminal destinataire (T2) et un deuxième terminal destinataire (T3), d'un contenu numérique contenant une donnée représentative d'un nombre (*N*) de prêts autorisés du contenu numérique par le terminal source, comprenant les étapes suivantes :
- modification (103) du contenu numérique comprenant l'insertion par le terminal source, au sein dudit contenu numérique, d'une donnée représentative d'un nombre (*N*') de prêts autorisés du contenu numérique par le premier terminal destinataire, inférieur au nombre (*N*) de prêts autorisés du contenu numérique par le terminal source ; et
- transmission (104) du contenu numérique modifié audit au moins un premier terminal destinataire,
- transmission (106) dudit contenu numérique modifié, par le premier terminal destinataire vers un deuxième terminal destinataire (T3) en fonction de la donnée représentative d'un nombre (*N*') de prêts autorisés du contenu numérique par le premier terminal destinataire.

2. Procédé de transmission selon la revendication 1, **caractérisé en ce que** le contenu numérique est reçu (102) au préalable d'un serveur de contenus (S), le nombre (*N*) de prêts autorisés du contenu numérique par le terminal source étant déterminé par ledit serveur de contenus.

3. Procédé de transmission selon la revendication 1 ou 2, **caractérisé en ce que** le nombre (N') de prêts autorisés du contenu numérique par le premier terminal destinataire correspond au nombre (*N*) de prêts autorisés du contenu numérique par le terminal source diminué par le nombre de terminaux destinataires auxquels le contenu numérique modifié est transmis.

4. Procédé de transmission selon l'une des revendications 1 à 3, **caractérisé en ce que** le nombre (*N*') de prêts autorisés du contenu numérique par le premier terminal destinataire est un nombre de prêts fixé au moyen du terminal source.

5. Procédé de transmission selon l'une des revendications 1 à 4, dans lequel le contenu numérique est mémorisé dans le terminal source, **caractérisé en ce que** la donnée représentative d'un nombre (N) de prêts autorisés du contenu numérique par le terminal source est modifiée, dans le contenu numérique mémorisé, en fonction du nombre de terminaux destinataires auxquels le contenu numérique modifié est transmis et/ou du nombre (*N*') de prêts autorisés du contenu numérique par le premier terminal destinataire.

6. Procédé de transmission selon l'une des revendications 1 à 5, **caractérisé en ce que** la modification (103) du contenu numérique comprend en outre l'insertion, au sein dudit contenu numérique, d'une période de prêt (P0) du contenu, le premier terminal destinataire (T2) bloquant l'accès au contenu reçu à l'expiration de ladite période de prêt.

7. Procédé de transmission selon l'une des revendications 1 à 6, **caractérisé en ce que** la modification (103) du contenu numérique comprend en outre l'insertion, au sein dudit contenu numérique, d'un identifiant du contenu numérique et d'un identifiant du premier terminal destinataire, le premier terminal destinataire donnant accès au contenu numérique modifié en fonction dudit identifiant du premier terminal destinataire.

8. Procédé de transmission selon l'une des revendications 1 à 7, **caractérisé en ce que** la modification (103) du contenu numérique comprend en outre l'insertion, au sein dudit contenu numérique, d'un identifiant du terminal source, le procédé comprenant en outre la transmission (107) au terminal source d'une notification de résiliation de prêt au moyen dudit identifiant du terminal source.

9. Procédé de transmission selon la revendication 8, **caractérisé en ce que** la notification de résiliation de prêt est un message comprenant le contenu numérique modifié.

10. Procédé de transmission selon l'une quelconque des revendications 1 à 9, **caractérisé en ce que** l'insertion de la donnée représentative d'un nombre (*N*') de prêts autorisés du contenu numérique par le premier terminal destinataire consiste à remplacer, au sein du contenu numérique, la donnée représentative d'un nombre (*N*) de prêts autorisés du contenu numérique par le terminal source par ladite donnée représentative d'un nombre (*N*') de prêts autorisés du contenu numérique par le premier terminal destinataire.

11. Procédé de retransmission par un premier terminal destinataire (T2) d'un contenu numérique reçu d'un terminal source (T1), ledit contenu numérique contenant une donnée représentative d'un nombre (*N*') de prêts autorisés dudit contenu numérique par le premier terminal destinataire, le procédé comprenant les étapes suivantes :
- obtention par le premier terminal destinataire, à partir dudit contenu numérique, dudit nombre (*N*') de prêts autorisés dudit contenu numérique par le premier terminal destinataire ;
- modification du contenu numérique comprenant l'insertion par le terminal source, au sein dudit contenu numérique, d'une deuxième donnée représentative d'un nombre de prêts autorisés du contenu numérique par un deuxième terminal destinataire, inférieur au nombre (N') de prêts autorisés du contenu numérique par le premier terminal destinataire (T2); et
- transmission (106) du contenu numérique modifié vers un deuxième terminal destinataire (T3)

12. Procédé selon la revendication 11, dans lequel le premier terminal destinataire (T2) envoie une requête d'autorisation de prêt au terminal source (T1), le contenu numérique modifié n'étant transmis (106) vers le deuxième terminal destinataire (T3) que suite à la réception, par le premier terminal destinataire, d'un message de réponse positif à ladite requête.

13. Terminal (T2), dit terminal relais, pour la retransmission vers au moins un terminal destinataire (T3), d'un contenu numérique reçu d'un terminal source (T1) contenant une donnée représentative d'un nombre (*N*') de prêts autorisés dudit contenu numérique par le terminal relais, comprenant :
- des moyens d'obtention, à partir du contenu numérique reçu, dudit nombre (*N'*) de prêts autorisés dudit contenu numérique par le terminal relais ;
- des moyens de modification du contenu numérique comprenant l'insertion par le terminal source, au sein dudit contenu numérique, d'une deuxième donnée représentative d'un nombre de prêts autorisés du contenu numérique par un deuxième terminal destinataire, inférieur au nombre (N') de prêts autorisés du contenu numérique par le premier terminal destinataire (T2); et
- des moyens de transmission (106) du contenu numérique modifié vers ledit deuxième terminal destinataire (T3).

14. Système de transmission de contenus numériques comprenant un terminal source et un terminal relais (T2) selon la revendication 13.

## Patentansprüche

1. Verfahren zur Übertragung eines digitalen Inhalts, der ein für die Anzahl (*N*) zulässiger Verleihungen des digitalen Inhalts durch das Ausgangsendgerät repräsentatives Datenelement enthält, zwischen einem Ausgangsendgerät (T1), einem ersten Empfängerendgerät (T2) und einem zweiten Empfängerendgerät (T3), umfassend die folgenden Schritte:
- Ändern (103) des digitalen Inhalts, umfassend das Einfügen, durch das Ausgangsendgerät, eines Datenelements in den digitalen Inhalt, das für eine Anzahl (*N*') zulässiger Verleihungen des digitalen Inhalts durch das erste Empfängerendgerät repräsentativ ist, die geringer als die Anzahl (*N*) zulässiger Verleihungen des digitalen Inhalts durch das Ausgangsendgerät ist; und
- Übertragen (104) des geänderten digitalen Inhalts an das mindestens eine erste Empfängerendgerät,
- Übertragen (106) des geänderten digitalen Inhalts, durch das erste Empfängerendgerät zu einem zweiten Empfängerendgerät (T3), in Abhängigkeit von dem für eine Anzahl (*N*') zulässiger Verleihungen des digitalen Inhalts durch das erste Empfängerendgerät repräsentativen Datenelement.

2. Übertragungsverfahren nach Anspruch 1, **dadurch gekennzeichnet, dass** der digitale Inhalt zuvor von einem Inhalte-Server (S) empfangen wird (102), wobei die Anzahl (*N*) zulässiger Verleihungen des digitalen Inhalts durch das Ausgangsendgerät von dem Inhalte-Server bestimmt wird.

3. Übertragungsverfahren nach Anspruch 1 oder 2, **dadurch gekennzeichnet, dass** die Anzahl (*N*') zulässiger Verleihungen des digitalen Inhalts durch das erste Empfängerendgerät der Anzahl (*N*) zulässiger Verleihungen des digitalen Inhalts durch das Ausgangsendgerät abzüglich der Anzahl von Empfängerendgeräten, an die der geänderte digitale Inhalt übertragen wird, entspricht.

4. Übertragungsverfahren nach einem der Ansprüche 1 bis 3, **dadurch gekennzeichnet, dass** die Anzahl (*N'*) zulässiger Verleihungen des digitalen Inhalts durch das erste Empfängerendgerät eine Anzahl von Verleihungen ist, die mittels des Ausgangsendgeräts festgelegt wird.

5. Übertragungsverfahren nach einem der Ansprüche 1 bis 4, bei dem der digitale Inhalt im Ausgangsendgerät gespeichert wird, **dadurch gekennzeichnet, dass** das für eine Anzahl (*N*) zulässiger Verleihungen des digitalen Inhalts durch das Ausgangsendgerät repräsentative Datenelement in dem gespeicherten digitalen Inhalt in Abhängigkeit von der Anzahl von Empfängerendgeräten, an die der geänderte digitale Inhalt übertragen wird, und/oder in Abhängigkeit von der Anzahl (*N*') zulässiger Verleihungen des digitalen Inhalts durch das erste Empfängerendgerät geändert wird.

6. Übertragungsverfahren nach einem der Ansprüche 1 bis 5, **dadurch gekennzeichnet, dass** das Ändern (103) des digitalen Inhalts ferner das Einfügen eines Verleihzeitraums (P0) des Inhalts in den digitalen Inhalt umfasst, wobei das erste Empfängerendgerät (T2) den Zugriff auf den empfangenen Inhalt bei Ablauf des Verleihzeitraums sperrt.

7. Übertragungsverfahren nach einem der Ansprüche 1 bis 6, **dadurch gekennzeichnet, dass** das Ändern (103) des digitalen Inhalts ferner das Einfügen einer Kennung des digitalen Inhalts und einer Kennung des ersten Empfängerendgeräts in den digitalen Inhalt umfasst, wobei das erste Empfängerendgerät Zugriff auf den geänderten digitalen Inhalt in Abhängigkeit von der Kennung des ersten Empfängerendgeräts gewährt.

8. Übertragungsverfahren nach einem der Ansprüche 1 bis 7, **dadurch gekennzeichnet, dass** das Ändern (103) des digitalen Inhalts ferner das Einfügen einer Kennung des Ausgangsendgeräts in den digitalen Inhalt umfasst, wobei das Verfahren ferner das Übertragen (107) einer Ausleihkündigungsbenachrichtigung an das Ausgangsendgerät mittels der Kennung des Ausgangsendgeräts umfasst.

9. Übertragungsverfahren nach Anspruch 8, **dadurch gekennzeichnet, dass** die Ausleihkündigungsbenachrichtigung eine Nachricht ist, die den geänderten digitalen Inhalt umfasst.

10. Übertragungsverfahren nach einem der Ansprüche 1 bis 9, **dadurch gekennzeichnet, dass** das Einfügen des für eine Anzahl (*N*') zulässiger Verleihungen des digitalen Inhalts durch das erste Empfängerendgerät repräsentativen Datenelements darin besteht, in dem digitalen Inhalt das für eine Anzahl (*N*) zulässiger Verleihungen des digitalen Inhalts durch das Ausgangsendgerät repräsentative Datenelement durch das für eine Anzahl (*N*') zulässiger Verleihungen des digitalen Inhalts durch das erste Empfängerendgerät repräsentative Datenelement zu ersetzen.

11. Verfahren zur Weiterübertragung eines von einem Ausgangsendgerät (T1) empfangenen digitalen Inhalts durch ein erstes Empfängerendgerät (T2), wobei der digitale Inhalt ein für eine Anzahl (*N'*) zulässiger Verleihungen des digitalen Inhalts durch das erste Empfängerendgerät repräsentatives Datenelement enthält, wobei das Verfahren die folgenden Schritte umfasst:
- Erhalten, durch das erste Empfängerendgerät, ausgehend von dem digitalen Inhalt, der Anzahl (*N*') zulässiger Verleihungen des digitalen Inhalts durch das erste Empfängerendgerät;
- Ändern des digitalen Inhalts, umfassend das Einfügen, durch das Ausgangsendgerät, eines zweiten Datenelements in den digitalen Inhalt, das für eine Anzahl zulässiger Verleihungen des digitalen Inhalts durch ein zweites Empfängerendgerät repräsentativ ist, die geringer als die Anzahl (*N*') zulässiger Verleihungen des digitalen Inhalts durch das erste Empfängerendgerät (T2) ist; und
- Übertragen (106) des geänderten digitalen Inhalts zu einem zweiten Empfängerendgerät (T3).

12. Verfahren nach Anspruch 11, bei dem das erste Empfängerendgerät (T2) eine Verleihberechtigungsanfrage an das Ausgangsendgerät (T1) sendet, wobei der geänderte digitale Inhalt erst nach dem Empfangen einer positiven Antwortnachricht auf die Anfrage durch das erste Empfängerendgerät zum zweiten Empfängerendgerät (T3) übertragen wird (106).

13. Endgerät (T2), Vermittlerendgerät genannt, zur Weiterübertragung eines von einem Ausgangsendgerät (T1) empfangenen digitalen Inhalts, der ein für eine Anzahl (*N*') zulässiger Verleihungen des digitalen Inhalts durch das Vermittlerendgerät repräsentatives Datenelement enthält, zu mindestens einem Empfängerendgerät (T3) umfassend:
- Einrichtungen zum Erhalten, ausgehend von dem empfangenen digitalen Inhalt, der Anzahl (*N'*) zulässiger Verleihungen des digitalen Inhalts durch das Vermittlerendgerät;
- Einrichtungen zum Ändern des digitalen Inhalts, umfassend das Einfügen, durch das Ausgangsendgerät, eines zweiten Datenelements in den digitalen Inhalt, das für eine Anzahl zulässiger Verleihungen des digitalen Inhalts durch ein zweites Empfängerendgerät repräsentativ ist, die geringer als die Anzahl (*N*') zulässiger Verleihungen des digitalen Inhalts durch das erste Empfängerendgerät (T2) ist; und
- Einrichtungen zum Übertragen (106) des geänderten digitalen Inhalts zu dem zweiten Empfängerendgerät (T3).

14. System zur Übertragung von digitalen Inhalten, umfassend ein Ausgangsendgerät und ein Vermittlerendgerät (T2) nach Anspruch 13.

## Claims

1. Method for transmitting, between a source terminal (T1), a first recipient terminal (T2) and a second recipient terminal (T3), digital content containing a datum representative of a number (*N*) of permitted loans of the digital content by the source terminal, comprising the following steps:
- modifying (103) the digital content, which modification comprises the insertion into said digital content, by the source terminal, of a datum representative of a number (*N*') of permitted loans of the digital content by the first recipient terminal, which is lower than the number (*N*) of permitted loans of the digital content by the source terminal; and
- transmitting (104) the modified digital content to said at least one first recipient terminal,
- transmitting (106) said modified digital content from the first recipient terminal to a second recipient terminal (T3) on the basis of the datum representative of a number (*N*') of permitted loans of the digital content by the first recipient terminal.

2. Transmission method according to Claim 1, **characterized in that** the digital content is received (102) beforehand from a content server (S), the number (*N*) of permitted loans of the digital content by the source terminal being determined by said content server.

3. Transmission method according to Claim 1 or 2, **characterized in that** the number (*N*') of permitted loans of the digital content by the first recipient terminal corresponds to the number (*N*) of permitted loans of the digital content by the source terminal minus the number of recipient terminals to which the modified digital content is transmitted.

4. Transmission method according to one of Claims 1 to 3, **characterized in that** the number (*N*') of permitted loans of the digital content by the first recipient terminal is a number of loans that is set by means of the source terminal.

5. Transmission method according to one of Claims 1 to 4, wherein the digital content is stored in the source terminal, **characterized in that** the datum representative of a number (*N*) of permitted loans of the digital content by the source terminal is modified, in the stored digital content, on the basis of the number of recipient terminals to which the modified digital content is transmitted and/or the number (*N*') of permitted loans of the digital content by the first recipient terminal.

6. Transmission method according to one of Claims 1 to 5, **characterized in that** the modification (103) of the digital content further comprises the insertion into said digital content of a loan period (P0) for the content, the first recipient terminal (T2) blocking access to the received content once said loan period expires.

7. Transmission method according to one of Claims 1 to 6, **characterized in that** the modification (103) of the digital content further comprises the insertion into said digital content of an identifier of the digital content and an identifier of the first recipient terminal, the first recipient terminal providing access to the modified digital content on the basis of said identifier of the first recipient terminal.

8. Transmission method according to one of Claims 1 to 7, **characterized in that** the modification (103) of the digital content further comprises the insertion into said digital content of an identifier of the source terminal, the method further comprising the transmission (107) of a loan termination notification to the source terminal by means of said identifier of the source terminal.

9. Transmission method according to Claim 8, **characterized in that** the loan termination notification is a message comprising the modified digital content.

10. Transmission method according to any one of Claims 1 to 9, **characterized in that** the insertion of the datum representative of a number (N') of permitted loans of the digital content by the first recipient terminal consists in replacing, within the digital content, the datum representative of a number (*N*) of permitted loans of the digital content by the source terminal with said datum representative of a number (*N*') of permitted loans of the digital content by the first recipient terminal.

11. Method for forwarding, by means of a first recipient terminal (T2), digital content that has been received from a source terminal (T1), said digital content containing a datum representative of a number (N') of permitted loans of said digital content by the first recipient terminal, the method comprising the following steps:
- the first recipient terminal obtaining, from said digital content, said number (*N*') of permitted loans of said digital content by the first recipient terminal;
- modifying the digital content, which modification comprises the insertion into said digital content, by the source terminal, of a second datum representative of a number of permitted loans of the digital content by a second recipient terminal, which is lower than the number (N') of permitted loans of the digital content by the first recipient terminal (T2); and
- transmitting (106) the modified digital content to a second recipient terminal (T3).

12. Method according to Claim 11, wherein the first recipient terminal (T2) sends a loan authorization request to the source terminal (T1), the modified digital content not being transmitted (106) to the second recipient terminal (T3) until after the first recipient terminal has received a positive response message in response to said request.

13. Terminal (T2), designated as a relay terminal, for forwarding, to at least one recipient terminal (T3), digital content that has been received from a source terminal (T1) and contains a datum representative of a number (*N*') of permitted loans of said digital content by the relay terminal, comprising:
- means for obtaining, from the received digital content, said number (*N*') of permitted loans of said digital content by the relay terminal;
- means for modifying the digital content, which modification comprises the insertion into said digital content, by the source terminal, of a second datum representative of a number of permitted loans of the digital content by a second recipient terminal, which is lower than the number (N') of permitted loans of the digital content by the first recipient terminal (T2); and
- means for transmitting (106) the modified digital content to said second recipient terminal (T3).

14. System for transmitting digital content comprising a source terminal and a relay terminal (T2) according to Claim 13.
